# FASCICULE DE BREVET EUROPEEN

(11) **EP 3 704 471 B1**
(45) Date de publication et mention de la délivrance du brevet: **14.09.2022**
(21) Numéro de dépôt: 18795646.1
(22) Date de dépôt: 31.10.2018
(51) Int. Cl.: G01N 21/64, G02B 21/16, G02B 21/36, G02B 27/58

(54) **APPAREIL ET PROCEDE DE MICROSCOPIE A FLUORESCENCE A SUPER-RESOLUTION ET DE MESURE DE TEMPS DE VIE DE FLUORESCENCE**
VORRICHTUNG UND VERFAHREN ZUR HOCHAUFLÖSENDEN FLUORESZENZMIKROSKOPIE UND FLUORESZENZLEBENSDAUERMESSUNG
DEVICE AND METHOD FOR SUPER-RESOLUTION FLUORESCENCE MICROSCOPY AND FLUORESCENCE LIFETIME MEASUREMENT

(30) Priorité: 02.11.2017 FR 1760334
(43) Date de publication de la demande: 09.09.2020
(73) Titulaire: Centre National de la Recherche Scientifique, 75016 Paris (FR); Ecole Supérieure de Physique et de Chimie Industrielles de la Ville de Paris, 75005 Paris (FR)
(72) Inventeur: KRACHMALNICOFF, Valentina, 75013 Paris (FR); IZEDDIN, Ignacio, 75013 Paris (FR); BOUCHET, Dorian, 75011 Paris (FR); DE WILDE, Yannick, 75013 Paris (FR)
(74) Mandataire: Atout PI Laplace
(86) Numéro de dépôt international: PCT/EP2018/079865
(87) Numéro de publication internationale: WO 2019/086537

(56) Documents cités:
- EP-A1- 3 203 215
- US-A1- 2013 015 331
- US-A1- 2013 126 755
- ANTOLOVIC I M ET AL: "Photon-Counting Arrays for Time-Resolved Imaging", SENSORS, vol. 16, no. 7, 29 juin 2016 (2016-06-29), page 1005, XP055464561, DOI: 10.3390/s16071005
- SCHNITZBAUER J ET AL: "Super-resolution microscopy with DNA-PAINT", Nature Protocols, vol. 12 18 mai 2017 (2017-05-18), pages 1198-1228, XP009509480, DOI: 10.1038/nprot.2017.024 Extrait de l'Internet: URL:https://www.nature.com/articles/nprot. 2017.024 [extrait le 2018-11-20]
- BRUSCHINI C ET AL: "Ten years of biophotonics single-photon SPAD imager applications: retrospective and outlook", PROGRESS IN BIOMEDICAL OPTICS AND IMAGING, SPIE - INTERNATIONAL SOCIETY FOR OPTICAL ENGINEERING, BELLINGHAM, WA, US, vol. 10069, 21 février 2017 (2017-02-21), pages 100691S-100691S, XP060085983, ISSN: 1605-7422, DOI: 10.1117/12.2256247 ISBN: 978-1-5106-0027-0
- ANTOLOVIC I M ET AL: "SPAD imagers for super resolution localization microscopy enable analysis of fast fluorophore blinking", SCIENTIFIC REPORTS, vol. 7, 13 mars 2017 (2017-03-13), page 44108, XP055464570, DOI: 10.1038/srep44108
- CHARBON EDOARDO: "Single-photon imagers", 2014 CONFERENCE ON LASERS AND ELECTRO-OPTICS (CLEO) - LASER SCIENCE TO PHOTONIC APPLICATIONS, THE OPTICAL SOCIETY, 8 juin 2014 (2014-06-08), pages 1-3, XP032707009, DOI: 10.1364/CLEO_SI.2014.STU3G.5

## Description

L'invention porte sur un appareil et sur un procédé de microscopie à fluorescence à super-résolution permettant d'effectuer des mesures de temps de vie de fluorescence avec une résolution spatiale nanométrique et à l'échelle de la molécule individuelle. Elle porte également sur un produit programme d'ordinateur permettant de mettre en œuvre des étapes de traitement de données d'un tel procédé.

L'invention relève du domaine de la microscopie optique, et plus précisément de la microscopie à fluorescence, et est principalement destinée à des applications à la biologie et à la biochimie.

La résolution spatiale des techniques de microscopie optique conventionnelle est limitée par les effets de diffraction à une valeur de l'ordre de grandeur de la longueur d'onde de la lumière utilisée (typiquement quelques centaines de nanomètres). De nombreuses méthodes ont cependant été envisagées pour permettre l'obtention de résolutions meilleures que la limite de diffraction ; on parle alors de « super-résolution ». On peut citer en particulier l'imagerie en champ proche et des techniques de microscopie à fluorescence en champ lointain telle la microscopie à illumination structurée. Les techniques de microscopie à fluorescence sont particulièrement importantes en biologie, et leur développement a notamment été récompensé par le prix Nobel de chimie de 2014.

Parmi les techniques de microscopie à fluorescence à super-résolution on peut citer en particulier la microscopie STED (de l'anglais « STimulated-Emission-Depletion », c'est-à-dire déplétion par émission stimulée) et la SMLM (de l'anglais « Single-Molecule Localization Microscopy », c'est-à-dire microscopie par localisation de molécules uniques), qui englobe le PALM (de l'anglais « Photoactivated Localization Microscopy », microscopie par localisation photoactivée), et le STORM (de l'anglais « Stochastic Optical Reconstruction Microscopy », c'est-à-dire microscopie par reconstruction optique stochastique). Voir par exemple :
- S. W. Hell, J. Wichmann « Breaking the diffraction resolution limit by stimulated emission: stimulated-emission-depletion fluorescence microscopy », Optics Letters, Vol. 19, No. 11, 1er juin 1994;
- T. A. Klar et al. « Fluorescence microscopy with diffraction resolution barrier broken by stimulated emission », PNAS, Vol. 97, No. 15, 18 juillet 2000.

La microscopie STED est une technique de microscopie confocale à balayage utilisant deux faisceaux lumineux d'éclairage colinéaires : un premier faisceau excitant l'émission fluorescente d'un fluorophore (marqueur fluorescent) et un deuxième faisceau, en forme d'anneau, qui induit une déplétion de l'émission stimulée éteignant la fluorescence dans la périphérie de la région éclairée par le premier faisceau. Cette technique permet d'obtenir une résolution de quelques dizaines de nanomètres mais, comme dans toutes les techniques à balayage, le temps d'acquisition dépend de la taille de l'image et peut devenir très important. En outre, elle ne permet de détecter des molécules individuelles que lorsque la densité du marquage fluorescent est très faible, de telle sorte qu'en moyenne une seule molécule fluorescente se trouve dans une tache de diffraction. Même dans ce cas, il est impossible de suivre la diffusion d'une molécule.

La SMLM est une technique de type stochastique, qui utilise des marqueurs fluorescents photoconvertibles, c'est-à-dire pouvant passer d'un premier à un deuxième état sous l'effet d'un rayonnement lumineux à une longueur d'onde déterminée. L'éclairage s'effectue au moyen de deux faisceaux lumineux de longueurs d'ondes différentes : un premier faisceau qui induit la photoconversion du marqueur, et un deuxième faisceau qui induit une émission fluorescente des molécules du marquer se trouvant dans leur deuxième état (photoconverties ou photoactivées). Les molécules du marqueur passent de manière aléatoire du premier au deuxième état. Dans le deuxième état, les molécules peuvent être excitées par le deuxième faisceau et émettre des photons de fluorescence pendant un temps limité jusqu'à subir une altération irréversible (blanchiment) qui éteint leur fluorescence, ce temps étant typiquement de l'ordre de quelques dizaines de millisecondes. Ainsi, la fluorescence des différentes molécules du marqueur « s'allume » et « s'éteint » au cours du temps de manière aléatoire. Plusieurs images successives sont acquises, dans lesquelles les différents émetteurs fluorescents individuels apparaissent comme des taches de diffraction. L'intensité du premier faisceau est choisie de telle façon que, à un instant donné, les molécules dans le deuxième état et donc émettant un rayonnement de fluorescence quand elles sont excitées par le deuxième faisceau soient espacées d'une distance moyenne supérieure à la limite de diffraction. De cette façon la plupart des taches de diffraction peuvent être distinguées, ce qui permet l'identification des émetteurs fluorescents individuels. Ensuite, la position de ces derniers est déterminée avec une précision nanométrique par estimation du centre de la tache de diffraction correspondante. De cette façon, une image super-résolue peut être reconstruite. Par rapport à la microscopie STED, la technique SMLM présente l'avantage d'être « plein champ », donc avec un temps d'acquisition indépendant de la taille de l'image, et de permettre l'identification et le suivi dans le temps de molécules individuelles. La SMLM est décrite, par exemple, dans :
- E. Betzig et al. « Imaging Intracellular Fluorescent Proteins at Nanometer Resolution », Science, Vol. 313, 15 septembre 2006 ;
- M. J. Rust et al. « Sub-diffraction-limit imaging by stochastic optical reconstruction microscopy (STORM) », Nature Methods, Vol. 3, No. 10, octobre 2006.

Le temps de vie de la fluorescence d'un fluorophore (c'est-à-dire la réciproque du taux de décroissance de sa probabilité de désexcitation) dépend de son environnement et des interactions moléculaires qu'il subit. Sa mesure fournit donc des informations utiles sur le contexte biochimique.

La microscopie par imagerie de temps de vie de fluorescence (FLIM, de l'anglais « Fluorescence-Lifetime Imaging Microscopy ») est une technique d'imagerie produisant des images basée sur les différences de temps de vie de la fluorescence d'un échantillon fluorescent. Typiquement, sa résolution est limitée par diffraction. Voir par exemple :
- C.-W. Chang et al. « Fluorescence Lifetime Imaging Microscopy », Methods in Cell Biology, Vol. 81, chapitre 24.

Deux techniques ont été proposées dans le but d'obtenir des mesures de temps de vie de fluorescence avec une super-résolution spatiale.

Le document EP 1 584 918 décrit un procédé combinant les techniques STED et FLIM, et un appareil pour sa mise en œuvre. Cette approche présente les inconvénients déjà décrits au propos de la microscopie STED : temps d'acquisition dépendant de la taille de l'image à cause du fait que l'excitation des molécules fluorescentes s'effectue par balayage confocal, et donc potentiellement très long, et impossibilité de détecter des molécules individuelles. De plus, les intensités lumineuses mises en œuvre sont élevées, et donc difficilement compatibles avec l'imagerie *in vivo* à cause de phénomènes bien connus de phototoxicité.

Le document CN 102033058 décrit un appareil de microscopie comprenant deux objectifs agencés face à face. L'un de ces objectifs est utilisé pour détecter, par balayage, des molécules individuelles, tandis que l'autre permet d'effectuer des mesures de temps de vie de fluorescence. Si elle permet la détection de molécules individuelles, cette technique présente l'inconvénient commun à toutes les approches à balayage, à savoir un temps d'acquisition dépendant de la taille de l'image. En outre le dispositif ne se base pas sur un microscope conventionnel (commercial) et son alignement est très complexe et délicat.

Le document US 2013/0126755 fait état d'un appareil permettant d'acquérir, de manière synchrone, plusieurs paramètres en microscopie de fluorescence. Plus particulièrement, un tel appareil comprend un détecteur TSCSPC (comptage de photons individuels corrélés en temps et dans l'espace) associé à un dispositif périphérique. La technique TSCSPC est décrite plus en détail dans l'article de Sergei Stepanov, Sergei Bakhlanov, Evgeny Drobchenko, Hann-Jôrg Eckert, Klaus Kemnitz « Widefield TSCSPC-Systems with Large-Area- Detectors: Application in simultaneous Multi-Channel-FLIM » Proceedings of SPIE, June 2010.

Le document US 2013/0015331 et l'article de I. Michel Antolovic « Photon-Counting Arrays for Time-Resolved Imaging » divulguent des matrices de détecteurs de photons uniques associées à des réseaux de microlentilles, et leur application à des techniques de microscopie de fluorescence.

Le document EP 3 203 215 divulgue un appareil d'imagerie spectrale comprenant une matrice de détecteurs de lumière associée à un faisceau de fibres optiques.

L'invention vise à surmonter les inconvénients précités de l'art antérieur. Plus précisément, elle vise à procurer une technique de microscopie à super-résolution « plein champ », permettant la détection et le suivi dans le temps de molécules individuelles et une mesure simultanée de leurs temps de vie de fluorescence. Avantageusement une telle technique doit être simple à mettre en œuvre autour d'un système de microscopie commercial et compatible avec l'imagerie de cellules vivantes.

Conformément à l'invention, ce but est atteint en combinant la technique SMLM et des mesures de temps de vie de fluorescence. Il est intéressant de noter que cette combinaison était auparavant réputée impossible : voir Becker, W. (Ed.) (2015). « Advanced time-correlated single photon counting applications (Vol. 111) » Springer (Chapitre 2, Wolfgang Becker, Vladislav Shcheslavskiy, Hauke Studier « TCSPC FLIM with Différent Optical Scanning Techniques », section 2.10).

Un objet de l'invention est donc un procédé de microscopie à fluorescence à super-résolution selon la revendication 1.

Plus particulièrement, selon un premier mode de réalisation, le procédé comprend les étapes suivantes :
a) éclairer un échantillon contenant des émetteurs fluorescents photoconvertibles au moyen d'un premier faisceau lumineux à une première longueur d'onde et d'un deuxième faisceau lumineux à une deuxième longueur d'onde, la première longueur d'onde étant choisie de manière à activer lesdits émetteurs fluorescents en provoquant leur conversion d'un premier état vers un deuxième état différent du premier, la deuxième longueur d'onde étant différente de la première et adaptée pour induire une émission fluorescente des émetteurs fluorescents dans leur deuxième état ; et
b) acquérir une séquence d'images de ladite émission fluorescente au moyen d'un système d'imagerie comprenant un capteur d'images matriciel ;
   et est caractérisé en ce que :
   - ledit deuxième faisceau lumineux est pulsé, l'intervalle temporel entre deux impulsions successives étant supérieur au temps de vie de fluorescence des émetteurs fluorescents;
   - et en ce qu'il comprend également une étape de comptage de photons de l'émission fluorescente pour déterminer des retards d'arrivée desdits photons par rapport aux impulsions dudit deuxième faisceau lumineux, ledit comptage étant effectué avec une résolution spatiale permettant d'associer chaque photon à un ensemble de pixels dudit capteur d'images matriciel ; et
   - en ce que l'intensité du premier faisceau lumineux est choisie de telle sorte que, pendant le temps d'acquisition d'une dite image, un émetteur fluorescent individuel au plus soit activé en moyenne dans une région de l'échantillon correspondant à un dit ensemble de pixels du capteur d'images matriciel.

Selon un second mode de réalisation du procédé :
- l'échantillon :
   - présente une épaisseur sub-micrométrique,
   - est déposé sur une face d'un support diélectrique transparent à la longueur d'onde du faisceau lumineux d'excitation,
   - présente une surface opposée au support qui est fonctionnalisée avec des molécules d'un premier type et est mise en contact avec une solution contenant des molécules d'un deuxième type liées à des émetteurs fluorescents et susceptibles de se lier de manière transitoire aux molécules du premier type par une réaction présentant une cinétique telle que, en moyenne, une molécule du second type au plus soit liée à une molécule du premier type dans une région de l'échantillon correspondant à un dit ensemble de pixels du capteur d'images matriciel ; et :
- l'étape a) comprenant l'éclairage de l'échantillon par réflexion totale interne au moyen dudit faisceau lumineux d'excitation de telle sorte que l'émission fluorescente des seuls émetteurs fluorescents situés à une distance sub-micrométrique de la face du support diélectrique soit activée.

Selon des caractéristiques avantageuses d'un tel procédé, prises individuellement ou en combinaison :
- Ladite étape de comptage de photons peut comprendre :
   c) diriger une portion de ladite émission fluorescente vers un détecteur ou matrice de détecteurs à comptage de photon, ledit ou chaque détecteur de la matrice étant associé à un ensemble de pixels dudit capteur d'images matriciel ; et
   d) utiliser le ou les détecteurs à comptage de photons pour mesurer des retards d'arrivée de photons de fluorescence par rapport aux impulsions dudit faisceau lumineux d'excitation (deuxième faisceau lumineux).
- Le procédé peut comprendre également les étapes suivantes :
   e) utiliser la séquence d'images acquise lors de l'étape b) pour construire une image à super-résolution en localisant lesdits émetteurs fluorescents individuels ;
   f) utiliser les retards d'arrivé des photons de fluorescence mesurés lors de l'étape d) pour calculer des temps de vie de fluorescence, et les associer aux émetteurs fluorescents individuels localisés lors de l'étape e) ;
   les étapes e) et f) étant mises en œuvre au moyen d'un processeur électronique.
   - Ladite étape e) peut comprendre une localisation desdits émetteurs fluorescents individuels par estimation des centres de tâches de diffraction présents dans les images acquises lors de l'étape b).
   - Le procédé peut comprendre également une étape g) de corrélation spatio-temporelle entre les images acquises lors de l'étape b) et les retards d'arrivé des photons de fluorescence mesurés lors de l'étape d) pour associer lesdites durées de vie de fluorescence auxdits émetteurs fluorescents individuels.
   - Ladite matrice de détecteurs à comptage de photons peut comprendre une pluralité de dits détecteurs agencés suivant une pluralité de lignes et de colonnes.

Un autre objet de l'invention est un appareil de microscopie à fluorescence à super-résolution selon la revendication 9.

Selon un premier mode de réalisation, l'appareil comprend :
- une première source de lumière adaptée pour émettre un premier faisceau lumineux à une première longueur d'onde, ladite première longueur d'onde étant choisie de manière à activer des émetteurs fluorescents en provoquant leur conversion d'un premier état vers un deuxième état différent du premier ;
- une deuxième source de lumière adaptée pour émettre un deuxième faisceau lumineux à une deuxième longueur d'onde, différente de la première, ladite deuxième longueur d'onde étant différente de la première et adaptée pour induire une émission fluorescente des émetteurs fluorescents dans leur deuxième état ;
- un système optique configuré pour diriger le premier et le deuxième faisceau lumineux vers un échantillon ;
- un système de détection optique configuré pour acquérir une séquence d'images de fluorescence dudit échantillon ;
et est caractérisé en ce que :
- ladite deuxième source de lumière est une source puisée, l'intervalle temporel entre deux impulsions successives de cette source étant supérieur au temps de vie de fluorescence des émetteurs fluorescents ; et en ce que le système de détection optique est également configuré pour effectuer un comptage de photons de l'émission fluorescente pour déterminer des retards d'arrivée desdits photons par rapport aux impulsions dudit deuxième faisceau lumineux, ledit comptage étant effectué avec une résolution spatiale permettant d'associer chaque photon à un ensemble de pixels dudit capteur d'images matriciel.

Selon un second mode de réalisation de l'appareil, le moyen d'activation stochastique d'émetteurs fluorescents comprend un support diélectrique transparent à la longueur d'onde du faisceau lumineux d'excitation, sur une face duquel peut être déposé l'échantillon, et une cuve fluidique contenant ledit support ; ledit système optique étant configuré pour diriger le faisceau lumineux d'excitation à travers le support de telle sorte qu'il subisse une réflexion totale interne sur ladite face.

Selon des caractéristiques avantageuses d'un tel appareil, prises individuellement ou en combinaison :- Le système de détection optique peut comprendre : un système d'imagerie configuré pour acquérir ladite séquence d'images de fluorescence dudit échantillon ; un détecteur ou matrice de détecteurs à comptage de photons agencé de manière à recevoir une portion d'une émission fluorescente dudit échantillon, ledit ou chaque détecteur de la matrice étant associé audit ensemble de pixels dudit capteur d'images matriciel ; et un circuit électronique associé audit détecteur ou matrice de détecteurs à comptage de photons, configuré pour mesurer des retards d'arrivée de photons arrivant sur ledit ou chaque dit détecteur par rapport aux impulsions dudit deuxième faisceau lumineux.
- L'appareil peut comprendre également un processeur électronique configuré pour : recevoir en entrée la séquence d'images de fluorescence acquise par ledit capteur d'images matriciel et l'utiliser pour construire une image à super-résolution en localisant, dans les images de la séquence, des émetteurs fluorescents individuels ; recevoir en entrée des mesures de retard obtenues par ledit circuit électronique et les utiliser pour calculer des durées de vie de fluorescence ; et associer lesdites durées de vie de fluorescence aux émetteurs fluorescents individuels localisés.
- Ledit processeur électronique peut être configuré pour localiser lesdits émetteurs fluorescents individuels par estimation des centres de tâches de diffraction présents dans les images acquises par ledit capteur d'images matriciel.
- Ledit processeur électronique peut être configuré pour associer lesdits temps de vie de fluorescence aux émetteurs fluorescents individuels localisés en effectuant une corrélation spatio-temporelle entre les images acquises par ledit capteur d'images matriciel et les mesures de retard obtenues par ledit circuit électronique.
- Ledit ou lesdits détecteurs à comptage de photons peuvent être des diodes à avalanche à photons individuels.
- L'appareil peut comprendre une dite matrice de détecteurs à comptage de photons. La matrice de détecteurs à comptage de photons peut notamment être une matrice de diodes à avalanche à photons individuels non contigus, l'appareil comprenant également une matrice de microlentilles convergentes contiguës comprenant une dite microlentille agencée en regard de chaque diode à avalanche à photons individuels de la matrice, chaque dite microlentille étant optiquement conjuguée à un ensemble de pixels dudit capteur d'images matriciel.
- De manière alternative, l'appareil peut comprendre une pluralité de dits détecteurs à comptage de photon, ainsi qu'un faisceau de fibres optiques de telle façon qu'une première face d'extrémité de chaque fibre optique soit optiquement conjuguée à un ensemble de pixels dudit capteur d'images matriciel, un dit détecteur à comptage de photons étant agencé en regard d'une deuxième face d'extrémité de chaque dite fibre optique.

Encore un autre objet de l'invention est un produit programme d'ordinateur comprenant des instructions exécutables par un ordinateur selon la revendication 20.

D'autres caractéristiques, détails et avantages de l'invention ressortiront à la lecture de la description faite en référence aux dessins annexés donnés à titre d'exemple et qui représentent, respectivement :
- La figure 1, un schéma d'un appareil selon un mode de réalisation de l'invention ;
- La figure 2, une représentation fonctionnelle d'une matrice de détecteurs à comptage de photons associée à un réseau de microlentilles dans l'appareil de la figure 1 ;
- La figure 3, une illustration du principe de l'invention ;
- La figure 4, un organigramme d'un procédé selon l'invention ;
- Les figures 5A et 5B, une preuve de principe de l'invention, obtenue en utilisant un capteur à un seul pixel ;
- La figure 6 un détail d'un appareil selon un mode de réalisation alternatif de l'invention ;
- Les figures 7A et 7B, des images obtenues au moyen de l'appareil de la figure 1 ; et
- La figure 8, un détail d'un appareil selon un autre mode de réalisation alternatif de l'invention.

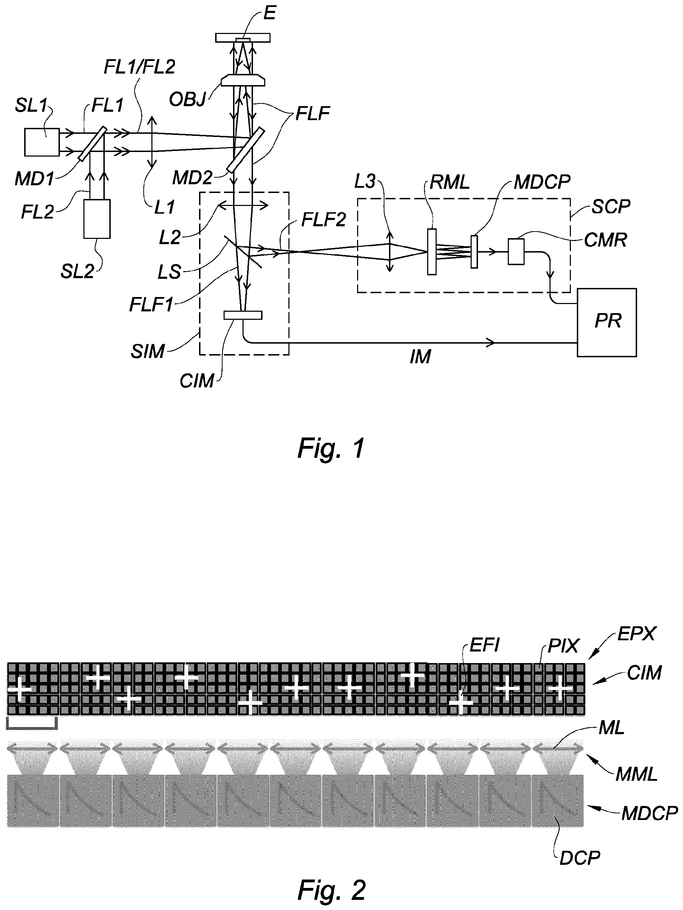

Comme illustré sur la figure 1, un appareil selon un mode de réalisation de l'invention comprend deux sources optiques, généralement des lasers :
- Une première source SL1 (source de conversion) émet un premier faisceau lumineux FL1 (faisceau de conversion) à une longueur d'onde λ₁ apte à induire la photoactivation d'un marqueur fluorescent photoconvertible. Par exemple, lorsque le marqueur est un fluorophore photoactivable Dendra, EOS ou Alexa Fluor (marques déposées) il peut s'agir d'une diode laser à faible puissance (< 1 mW) émettant à une longueur d'onde de 405 nm.
- Une deuxième source SL2 (source d'excitation) émet un deuxième faisceau lumineux FL2 (faisceau d'excitation) à une longueur d'onde λ₂ apte à exciter le marqueur fluorescent photoactivé par le premier faisceau. Cette deuxième source est de type impulsionnel, généralement picosecondes (durée d'impulsion comprise entre 100 fs et 100 ps) ou femtosecondes (durée d'impulsion inférieure à 100 fs), avec un espacement entre impulsions supérieur au temps de vie de fluorescence du marqueur photoactivé, qui est généralement de l'ordre de quelques nanosecondes. Comme cela sera expliqué plus loin, le caractère impulsionnel de la deuxième source est nécessaire pour permettre les mesures de temps de vie de fluorescence. Il peut s'agir par exemple, pour Alexa Fluor 674, d'une diode laser pulsée émettant à une longueur d'onde de 647 nm à une puissance de l'ordre du mW, avec un taux de répétition de 80 MHz et durée d'impulsion de l'ordre de 100 ps.

Les faisceaux FL1 et FL2 sont combinés grâce à un premier miroir dichroïque MD1, focalisés par une lentille convergente L1 puis dirigés par un deuxième miroir dichroïque MD2 de sorte à ce que les faisceaux soient focalisés au plan focal arrière d'un objectif OBJ à grande ouverture numérique, par exemple l'objectif d'un microscope commercial. Les faisceaux, après l'objectif, sont donc collimatés et l'échantillon E est éclairé en plein champ. L'échantillon E peut contenir des espèces biologiques ou biochimiques ou des nano-objets marqués par des fluorophores photoconvertibles sensibles aux longueurs d'onde λ₁ et λ₂, par exemple des protéines fluorescentes comme Dendra ou Eos (activation à 405 nm, excitation de l'état activé à 561 nm) ou des colorants organiques comme Alexa Fluor 647 (activation à 405 nm, excitation à 647 nm). Dendra, Eos et Alexa Fluor 647 sont des noms commerciaux et des marques déposées.

Le rayonnement de fluorescence émis par l'échantillon E est collecté par l'objectif OBJ pour former un faisceau parallèle FLF qui traverse le deuxième miroir dichroïque MD2, est focalisé par une deuxième lentille convergente L2 et est séparé par une lame séparatrice LS en deux composantes, FLF1 et FLF2.

La composante FLF1 est dirigée vers un capteur d'image matriciel CIM, par exemple du type EM-CCD (dispositif à couplage de charge multiplicateur d'électrons) ou sCMOS (CMOS scientifique), conjugué optiquement à l'échantillon E de manière à acquérir des images de fluorescence IM de ce dernier. La lentille L2 et le capteur CIM forment ainsi un système d'imagerie SI.

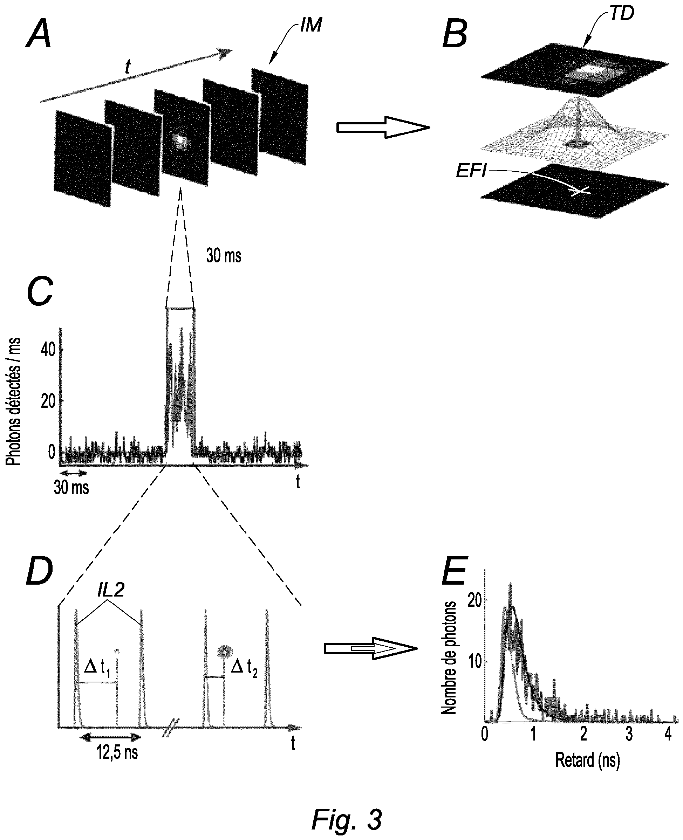

La cadence d'acquisition des images par le capteur matriciel CIM est très inférieure (d'un facteur 10⁵ - 10⁷) à la fréquence de répétition des impulsions de la seconde source de lumière SL2, et typiquement de l'ordre de 10 - 100 ms par trame. La partie A de la figure 3 représente schématiquement une séquence d'images acquises au cours du temps t, une de ces images montrant une tache lumineuse correspondant à un émetteur fluorescent activé.

La photoactivation des fluorophores de l'échantillon par le premier faisceau de lumière est un phénomène stochastique, et la probabilité qu'un fluorophore donné soit activé pendant le temps d'acquisition d'une trame du capteur CIM dépend de l'intensité du faisceau FL1. Conformément à l'invention, cette intensité est choisie de telle sorte que les fluorophores activés - et donc fluorescents - puissent être résolus sur les images. L'intensité maximale admissible du faisceau FL1 dépend de la densité des fluorophores, de leur dynamique de photoactivation, de l'épaisseur de l'échantillon, des caractéristiques du système optique d'imagerie et de la cadence d'acquisition des images.

Un processeur électronique PR - qui peut être par exemple un ordinateur, un réseau d'ordinateur, un circuit électronique dédié etc. - reçoit en entrée les images IM acquises par le capteur CIM et les traite conformément au principe de la SMLM, en ajustant une distribution gaussienne à chaque tache lumineuse visible sur une image et en considérant qu'un émetteur fluorescent individuel (référence EFI sur les figures 2 et 3) se trouve en correspondance du centre de la distribution. L'erreur quadratique moyenne de la localisation - inversement proportionnelle à la racine carrée du nombre de photons acquis - est typiquement de l'ordre de 10 nm, un ordre de grandeur de moins que la limite de diffraction. Cela est illustré sur les parties A et B de la figure 3.

La composante FLF2 du rayonnement de fluorescence est dirigée vers un système de comptage de photons SCP comprenant - dans le mode de réalisation de la figure 1 - une lentille L3, une matrice de microlentilles convergentes MML et une matrice de détecteurs à comptage de photons MDCP. Les détecteurs sont avantageusement des diodes à avalanche à photon unique (SPAD de l'anglais « Single-Photon Avalanche Detector »).

La matrice de microlentilles est conjuguée optiquement avec l'échantillon - en d'autres termes une image de l'échantillon est formée à sa surface. Comme illustré sur la figure 2, chaque détecteur à comptage de photons DCP est agencé derrière une microlentille respective, ML. La microlentille ML concentre sur le détecteur ML les photons provenant d'une région de l'échantillon qui est conjuguée à un ensemble EPX d'une pluralité de pixels PIX du capteur CIM (25 pixels formant un carré de 5x5 dans l'exemple de la figure 2). La fonction principale de la matrice de microlentilles est d'améliorer le facteur de remplissage de la matrice de détecteurs. En effet, en raison des contraintes inhérentes à la technologie SPAD, une matrice MDCP présente typiquement des détecteurs de 50 µm de côté et un pas de 250 µm. Sans microlentilles, par conséquent, la grande majorité des photons parvenant à la matrice de détecteurs serait perdue. On comprendra par ailleurs que la figure 2, dans laquelle les parties « inactives » de la matrice de photodétecteurs ne sont pas représentées, ne constitue qu'une illustration fonctionnelle, et non une représentation fidèle de l'ensemble matrice de microlentilles - matrice de détecteurs.

Les dimensions de l'ensemble EPX associé à un détecteur à comptage de photon sont choisies en fonction de l'intensité lumineuse du faisceau FL1 de telle sorte que la probabilité d'avoir deux émetteurs fluorescents activés « en même temps » (c'est-à-dire pendant un même temps d'acquisition d'image) dans une région correspondant à un ensemble EPX soit négligeable (par exemple, non supérieure à 1/100). A minima on exigera que le nombre moyen de fluorophores activés pendant un même temps d'acquisition d'image dans une région correspondant à un ensemble EPX ne dépasse pas 1. L'intensité maximale admissible du faisceau FL1 dépend de la densité des fluorophores, de leur dynamique de photoactivation, de l'épaisseur de l'échantillon, de la taille de l'ensemble EPX et de la cadence d'acquisition des images.

La figure 2 montre un émetteur fluorescent individuel unique EFI dans chaque ensemble de pixels EPX associé à un détecteur respectif DCP de la matrice MDCP. Dans ces conditions, tous les photons détectés par le détecteur DCP peuvent être attribués à l'émetteur EFI, c'est-à-dire à une molécule individuelle dont la position, comme cela a été expliqué plus haut, peut être déterminée avec une précision nanométrique. La partie C de la figure 3 est un graphique représentant le nombre de comptages de photons par milliseconde par un détecteur DCP pendant le temps d'acquisition d'une image de fluorescence.

Un circuit électronique CMR permet de mesurer le retard (Δt₁, Δt₂ dans la partie D de la figure 3) de chaque photon détecté par rapport à l'impulsion IL2 immédiatement précédente du faisceau lumineux FL2 d'excitation de la fluorescence. Le circuit doit présenter une résolution temporelle meilleure d'au moins un facteur 10, et de préférence d'au moins un facteur 100, du temps de vie de fluorescence à déterminer. Typiquement, cette résolution temporelle doit être de l'ordre de la picoseconde (meilleure de 100 ps, de préférence meilleure de 10 ps).

Le processeur PR construit à partir de ces mesures un histogramme des retards (partie E de la figure 3), et s'en sert pour calculer le temps de vie de fluorescence de l'émetteur individuel EFI. On remarquera que le circuit CMR reçoit un signal représentatif de l'instant d'émission de chaque impulsion IL2, signal provenant par exemple d'une photodiode. Cela n'est pas représenté pour ne pas alourdir la figure.

Ainsi l'invention permet de mesurer le temps de vie de molécules fluorescentes individuelles dont la position est déterminée avec une résolution spatiale bien meilleure que la limite de diffraction, même dans des conditions de marquage dense (par exemple 1 molécule tous les 10 nm).

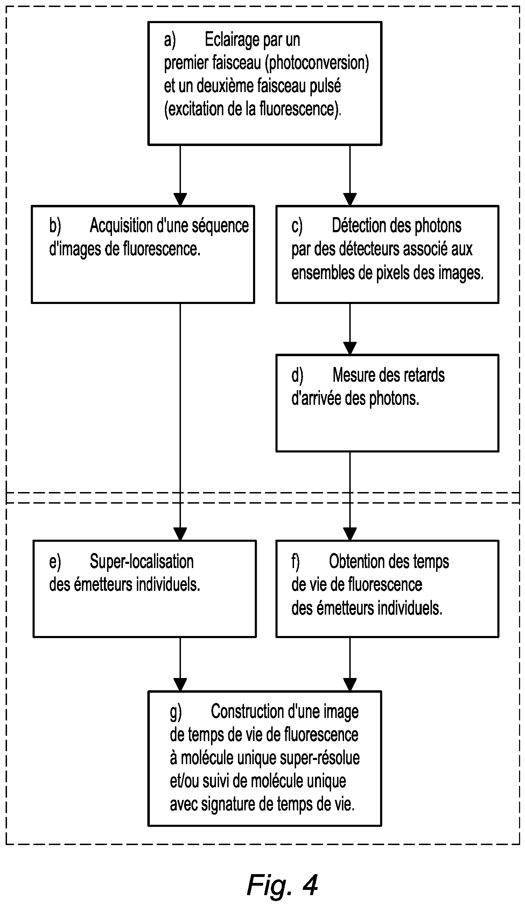

La figure 4 illustre schématiquement les différentes étapes d'un procédé selon l'invention.

L'étape a) correspond à l'éclairage de l'échantillon E par le faisceau FL1 de photoactivation et le faisceau pulsé FL2 d'excitation de la fluorescence. Simultanément, une séquence d'images de fluorescence est acquise (étape b) et la détection de photons (étape c), avec la mesure de leur temps d'arrivée (étape d), par des détecteurs associés aux pixels des images est effectuée.

Les étapes suivantes sont mises en œuvre par le processeur électronique PR, généralement au moyen d'un logiciel approprié : les émetteurs individuels sont super-localisés à partir des images acquises lors de l'étape b (e) et les temps de vie de fluorescence ce ces émetteurs sont obtenus à partir des retards d'arrivée de photons (f). Une corrélation spatio-temporelle des données générées lors des étapes e) et f) permet de construire une image de temps de vie de fluorescence à molécule unique super-résolue, et/ou de suivre la diffusion d'une molécule unique avec signature de son temps de vie de fluorescence, et même l'évolution dudit temps de vie (étape g).

Plus précisément, afin de limiter les artefacts, le logiciel de traitement des données exécuté par le processeur PR effectue de préférence les opérations suivantes :
- Seuillage des signaux acquis par le capteur d'image matriciel et par les détecteurs à comptage de photons, de manière à ne retenir que les signaux qui correspondent effectivement à la détection d'une molécule fluorescente photoactivée et à rejeter le bruit.
- Filtrage des signaux présentant des caractéristiques temporelles anormales. Par exemple, le photoblanchiment éteint la fluorescence en un temps dont la valeur moyenne est connue (par exemple, 30 ms). Si les images acquises par le capteur CIM montrent une tache lumineuse qui persiste trop longtemps, cela signifie qu'elle est due à plusieurs molécules, et doit donc être écartée. En ce qui concerne les détecteurs à comptage de photons, on s'attend à voir un signal qui « clignote » au-dessus et au-dessous d'un seul plusieurs fois en l'espace de quelques millisecondes, et à la détection d'au moins un nombre minimum prédéfini de photons (typiquement quelques centaines, par exemple 250). Si ces conditions ne sont pas remplies, les signaux sont écartés.
- Représentation binaire des données issues des deux détecteurs (capteur d'image et matrice de détecteurs à comptage de photon), sous la forme de « évènements ». Seuls les signaux correspondant à des évènements corrélés spatialement et temporellement sont utilisés pour la reconstruction de l'étape g). À l'issue de cette étape la position de chaque émetteur fluorescent individuel est associée à sa durée de vie de fluorescence.
- Si plusieurs émetteurs fluorescents sont détectés en même temps dans un même ensemble de pixels du capteur d'image, diverses règles peuvent être appliquées. Une possibilité consiste à écarter purement et simplement les signaux correspondants. Une autre possibilité consiste à ignorer des émetteurs situés près du bord de l'ensemble de pixels. Une troisième possibilité repose sur le fait que la réponse du DCP n'est pas la même pour un émetteur qui est au centre de l'EPX et à son bord. Par conséquent, la connaissance de la fraction du nombre de photons détectés par le DCP pour chaque émetteur permet l'assignation d'une note de confiance à la mesure de durée de vie. Par exemple, cette note sera élevée dans le cas de la détection simultanée d'un émetteur au centre de l'EPX et un deuxième au bord, alors qu'elle sera faible pour la détection simultanée de deux émetteurs à la même distance du centre. La première détection sera retenue, alors que la deuxième sera rejetée.

L'invention a été décrite en référence à un mode de réalisation particulier, mais des variantes sont possibles.

Par exemple il est possible, au moins en principe, d'utiliser un seul et même détecteur tel qu'une galette micro-canaux (MCP, de l'anglais « microchannel plate ») pour effectuer en même temps le comptage de photons et l'acquisition d'images. La simplification du système optique ainsi obtenue, cependant, ne justifie généralement pas la dégradation des performances que cela entraîne.

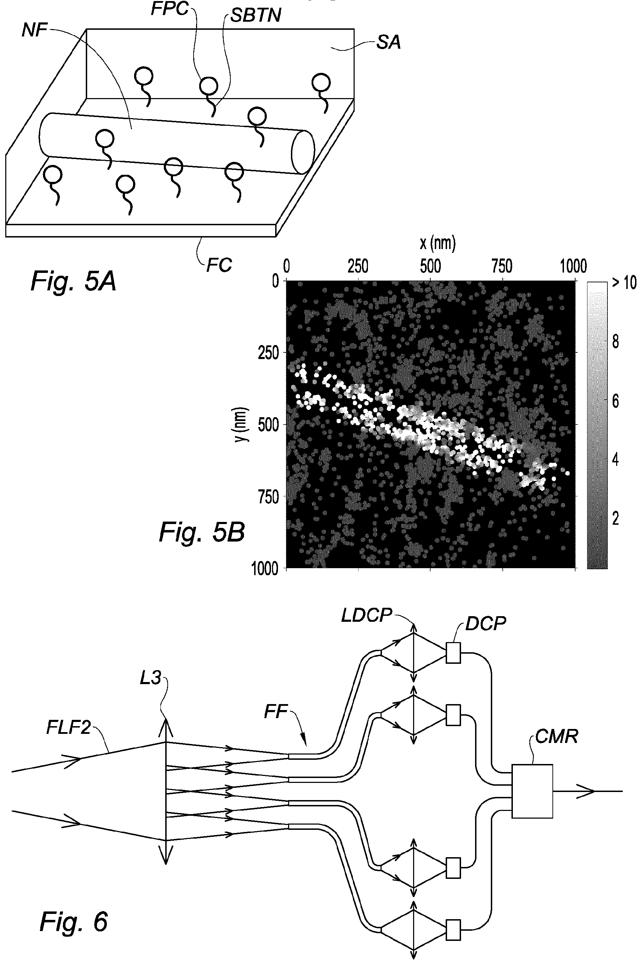

Une deuxième possibilité consiste à imager la zone d'intérêt de l'échantillon sur l'entrée d'un faisceau de fibres optiques FF au moyen de la lentille L3 dans la partie SCP du dispositif ; ainsi, une face d'entrée de chaque fibre est optiquement conjuguée à un ensemble de pixel du capteur CIM. En sortie de chaque fibre, le signal est détecté sur un détecteur DCP par l'intermédiaire d'une lentille LDCP respective. Cette configuration permet de s'affranchir de l'utilisation du réseau de microlentilles et du réseau de détecteurs en faveur de l'utilisation de lentilles LDCP et détecteurs individuels. Cette variante est illustrée sur la figure 6.

La matrice de microlentilles et la matrice de détecteurs à comptage de photons sont de préférence bidimensionnelles et agencées par lignes et par colonnes, mais cela n'est pas indispensable. On peut également utiliser des matrices unidimensionnelles et/ou présentant une organisation non-cartésienne.

Une autre variante consiste à utiliser un seul détecteur à comptage de photons, au lieu d'une matrice. Cela permet d'éviter d'avoir recours à une matrice de microlentille. La contrepartie est que le champ de vision du système d'imagerie doit être très limité, correspondant à un seul ensemble de pixels de la figure 2, qui a son tour doit être assez petit pour ne contenir, en moyenne, qu'une seule molécule photoactivée en même temps (c'est-à-dire sur un temps d'acquisition du capteur CIM). Ce mode de réalisation simplifié a été utilisé pour réaliser une preuve de principe de l'invention. Comme illustré sur la figure 5A, un nanofil d'argent NF (diamètre 100 nm, longueur de plusieurs micromètres) a été immergé dans une solution aqueuse SA contenue dans une cuvette. Un fluorophore photoconvertible Alexa Fluor 647 est lié par covalence à une protéine, la streptavidine, qui est lié à la surface du nanofil et de la lamelle de verre au moyen de la biotine. La streptavidine a une affinité de liaison à la biotine très élevée, et un conjugué de streptavidine est couramment utilisé en même temps qu'un conjugué de biotine pour la détection spécifique d'une variété de protéines. Sur la figure 5A, la référence FPC désigne le fluorophore photoconvertible (Alexa Fluor 647) et la référence SBTN le complexe streptavidine-biotine. La figure 5B est l'image obtenue au moyen d'un appareil semblable à celui de la figure 1, mais comportant un seul détecteur à comptage de photons. Le champ visuel est de 1000 x 1000 nm (1 µm²). Les nuances de gris correspondent à l'inverse des durées de vie de fluorescence (taux de désexcitation) mesurées. On peut voir que les molécules de Alexa Fluor 647 qui adhérent au fond FCV de la cuvette présentent un taux de désexcitation de fluorescence de l'ordre de 1 ns⁻¹. Ce taux augmente de plus d'un ordre de grandeur pour les molécules liées au nanofil. L'éclairage état effectué à travers le fond de la cuvette, la partie supérieure du nanofil est dans l'ombre et apparait noire.

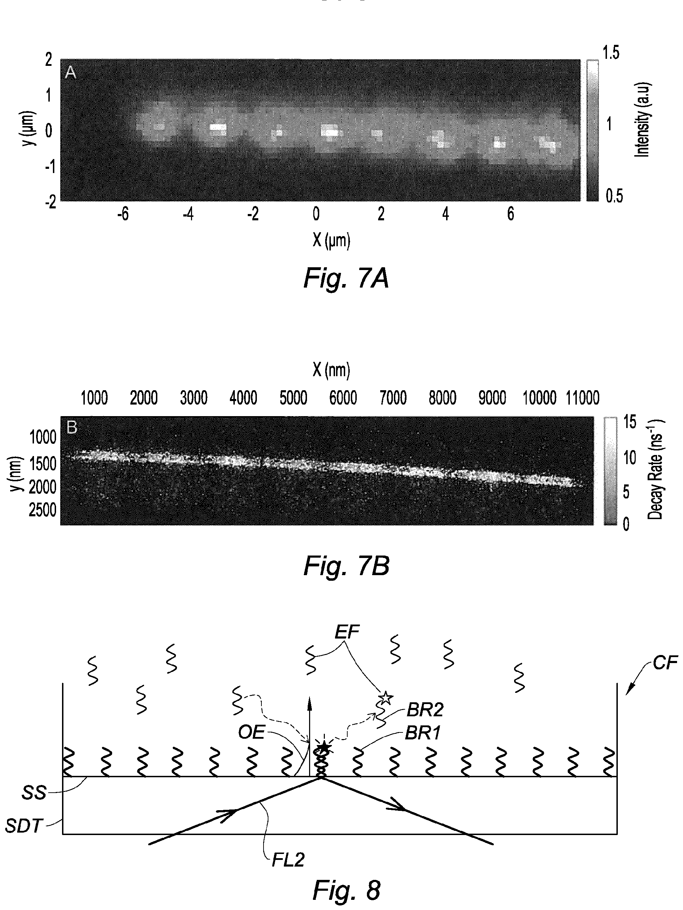

Les figures 7A et 7B montrent des images obtenues au moyen de l'appareil de la figure 1 avec une matrice de microlentilles convergentes et une matrice de 8 détecteurs à comptage de photons. Plus précisément, la figure 7A illustre la corrélation spatiale de la matrice de détecteurs à comptage de photons et le capteur d'image matriciel dans le plan de l'échantillon. Plus précisément, cette figure illustre comme, grâce au réseau de microlentilles, des zones contiguës dans le plan de l'échantillon sont conjuguées optiquement à chacun des détecteurs de comptage de photons, sans perte d'information entre chacune desdites zones. La figure 7A a été obtenue en balayant une source de lumière ponctuelle (une bille fluorescente) dans le plan de l'échantillon et en représentant l'intensité de fluorescence mesurée par chacun des détecteurs de comptage de photons pour chaque position de la bille (pixels de l'image). La figure 7B est une cartographie de changement de durée de vie de fluorescence induite par la présence d'un nanofil d'argent (diamètre 100 nm) comme décrit pour la figure 5.

L'invention a été décrite en référence à des modes de réalisation particuliers, utilisant des émetteurs fluorescents photoconvertibles. Cela n'est cependant pas essentiel. En effet, ce qui compte pour la mise en œuvre de l'invention, est que les émetteurs fluorescents soient activés de manière stochastique de telle sorte que, en moyenne, un seul émetteur au plus soit activé dans une région de l'échantillon correspondant à un ensemble de pixels du capteur d'images matriciel. Cela peut être obtenu autrement que par des moyens photochimiques. On peut par exemple avoir recours aux techniques uPAINT et DNA-PAINT décrite respectivement dans les articles suivants :
- Gregory Giannone et al. « Dynamic-Superresolution Imaging of Endogenous Proteins on Living Cells of Ultra-High Density », Biophysical Journal, Vol. 99, August 2010, pages 1303 - 1310;
- Joerg Schnitzbzauer et al. « Super-resolution microscopy with DNA-PAINT », Nature Protocols, Vol. 12, No. 6, pages 1198 - 1228 (2017).

Ces approches utilisent un échantillon fonctionnalisé par des molecules d'un premier type, mis en contact avec une solution de molécules d'un deuxième type qui sont à leur tour marquées par des émetteurs fluorescents (dans le cas du DNA-PAINT, les molécules du premier et du deuxième type sont des brins d'ADN). Les molécules du premier et du deuxième type sont susceptibles de se lier entre elles de manière transitoire. Un système d'éclairage adapté est utilisé pour activer la fluorescence des seuls émetteurs qui se trouvent à moins d'un micromètre, voire de quelques centaines de nanomètres, de la surface de l'échantillon - donc, en pratique, les émetteurs liés aux molécules du deuxième type qui se trouvent à un moment donné à être liées à l'échantillon par l'intermédiaire des molécules du premier type. Cela peut être obtenu, par exemple, au moyen d'un éclairage très incliné (angle d'incidence de l'ordre de 85° ou plus) ou en réflexion totale interne.

La figure 8 se rapporte à ce dernier cas. L'échantillon E se présente sous la forme d'une couche mince déposée à la surface SS d'un support diélectrique transparent SDT, par exemple une lamelle de verre. Le faisceau lumineux d'excitation FL2 traverse le support et subit une réflexion totale interne sur sa surface SS, ce qui engendre une onde évanescente OE se développant sur une distance d'environ 200 nm.

La surface de l'échantillon est recouverte d'un brin d'ADN (BR1) en haute densité (une densité égale ou supérieure à 1 brin par 10nm). L'ensemble support - échantillon se trouve dans une cuve fluidique CF remplie d'une solution dans laquelle se trouvent des deuxièmes brins d'ADN (BR2) auxquels sont attachés des fluorophores conventionnels (non photoactivables) EF. En solution, hors de la zone illuminée par l'onde évanescente, le fluorophore n'est pas excité. Les brins d'ADN BE1 et BR2 ont une séquence de reconnaissance avec une interaction faible dont la cinétique de liaison peut être contrôlée grâce à la longueur des brins d'ADN. Par diffusion, des complexes BR2-fluorophore arrivent à proximité et s'attachent à des brins BR1 de façon transitoire, ce qui permet l'excitation des fluorophores correspondants. Ces derniers émettent alors des photons et sont détectés comme fluorophores individuels par le détecteur d'image matriciel et le détecteur à comptage de photons. Après photoblanchissement, et suivant la cinétique de liaison BR1-BR2, chaque complexe BR2-fluorophore se détache du brin BR1 et, par diffusion, quitte la zone d'illumination par onde évanescente. Le phénomène se répète jusqu'à l'obtention d'une cartographie dense comme décrit ci-dessus. Pour assurer que, en moyenne, un seul émetteur au plus soit activé dans une région de l'échantillon correspondant à un ensemble de pixels du capteur d'images matriciel, et permettre donc la détection de fluorophores individuels, on peut agir sur deux paramètres : la cinétique de liaison (qui dépend la longueur des brins d'ADN) et la densité des brins BR2 en solution.

## Revendications

1. Procédé de microscopie à fluorescence à super-résolution comprenant les étapes suivantes :
a) provoquer une activation stochastique d'émetteurs fluorescents contenus dans un échantillon (E) à observer, et éclairer ledit échantillon avec un faisceau lumineux d'excitation (FL2) ayant une longueur d'onde adaptée pour induire une émission fluorescente (FLF) des émetteurs activés, ledit faisceau lumineux d'excitation étant pulsé; et
b) acquérir une séquence d'images (IM) de ladite émission fluorescente au moyen d'un système d'imagerie (SIM) comprenant un capteur d'images matriciel (CIM) comprenant une pluralité de pixels (PIX); le procédé comprend également une étape de comptage de photons de l'émission fluorescente au moyen d'un détecteur ou matrice de détecteurs à comptage de photons (MDCP) distinct dudit capteur d'images matriciel (CM) pour déterminer des retards d'arrivée desdits photons par rapport aux impulsions (IL2) dudit faisceau lumineux d'excitation,
**caractérisé en ce que** l'intervalle temporel entre deux impulsions successives est supérieur au temps de vie de fluorescence des émetteurs fluorescents; **en ce que**
chaque photon détecté par le détecteur ou matrice de détecteurs à comptage de photons (MDCP) est associé à un ensemble de pixels (EPX) de ladite pluralité de pixels (PIX) dudit capteur d'images matriciel (CIM); et
- **en ce que** l'activation stochastique des émetteurs fluorescents est réalisée de telle sorte que, pendant le temps d'acquisition d'une dite image, un émetteur fluorescent individuel (EFI) au plus soit activé en moyenne dans une région de l'échantillon correspondant à un dit ensemble de pixels du capteur d'images matriciel.

2. Procédé selon la revendication 1 dans lequel ladite étape de comptage de photons comprend :
c) diriger une portion de ladite émission fluorescente vers le détecteur ou matrice de détecteurs à comptage de photons (MDCP), ledit ou chaque détecteur de la matrice (DCP) étant associé à un ensemble de pixels (EPX) dudit capteur d'images matriciel ; et
d) utiliser le ou les détecteurs à comptage de photons pour mesurer des retards d'arrivée (Δt₁, Δt₂) de photons de fluorescence par rapport aux impulsions dudit faisceau lumineux d'excitation.

3. Procédé selon la revendication 2 comprenant également les étapes suivantes :
e) utiliser la séquence d'images acquise lors de l'étape b) pour construire une image à super-résolution en localisant lesdits émetteurs fluorescents individuels ;
f) utiliser les retards d'arrivé des photons de fluorescence mesurés lors de l'étape d) pour calculer des temps de vie de fluorescence, et les associer aux émetteurs fluorescents individuels localisés lors de l'étape e) ;
les étapes e) et f) étant mises en œuvre au moyen d'un processeur électronique (PR).

4. Procédé selon la revendication 3 dans lequel ladite étape e) comprend une localisation desdits émetteurs fluorescents individuels par estimation des centres de tâches de diffraction (TD) présents dans les images acquises lors de l'étape b).

5. Procédé selon l'une des revendications 3 ou 4 comprenant également une étape g) de corrélation spatio-temporelle entre les images acquises lors de l'étape b) et les retards d'arrivé des photons de fluorescence mesurés lors de l'étape d) pour associer lesdites durées de vie de fluorescence auxdits émetteurs fluorescents individuels.

6. Procédé selon l'une des revendications 2 à 5 dans lequel ladite matrice de détecteurs à comptage de photons comprend une pluralité de dits détecteurs (DCP) agencés suivant une pluralité de lignes et de colonnes.

7. Procédé selon l'une des revendications précédentes dans lequel les émetteurs fluorescents contenus dans l'échantillon sont convertibles et l'étape a) comprend l'éclairage de l'échantillon au moyen dudit faisceau lumineux d'excitation (FL2) et d'un faisceau lumineux de conversion (FL1), le faisceau lumineux de conversion présentant une longueur d'onde différente de celle du faisceau lumineux d'excitation et choisie de manière à activer lesdits émetteurs fluorescents en provoquant leur conversion d'un premier état vers un deuxième état différent du premier, l'intensité du faisceau lumineux de conversion étant choisie de telle sorte que, pendant le temps d'acquisition d'une dite image, un émetteur fluorescent individuel (EFI) au plus soit activé en moyenne dans une région de l'échantillon correspondant à un dit ensemble de pixels du capteur d'images matriciel.

8. Procédé selon l'une des revendications 1 à 6 dans lequel l'échantillon :
- présente une épaisseur sub-micrométrique,
- est déposé sur une face (SS) d'un support diélectrique (SDT) transparent à la longueur d'onde du faisceau lumineux d'excitation,
- présente une surface opposée au support qui est fonctionnalisée avec des molécules d'un premier type (BR1) et est mise en contact avec une solution contenant des molécules d'un deuxième type (BR2) liées à des émetteurs fluorescents (EF) et susceptibles de se lier de manière transitoire aux molécules du premier type par une réaction présentant une cinétique telle que, en moyenne, une molécule du second type au plus soit liée à une molécule du premier type dans une région de l'échantillon correspondant à un dit ensemble de pixels du capteur d'images matriciel ;
l'étape a) comprenant l'éclairage de l'échantillon par réflexion totale interne au moyen dudit faisceau lumineux d'excitation de telle sorte que l'émission fluorescente des seuls émetteurs fluorescents situés à une distance sub-micrométrique de la face du support diélectrique soit activée.

9. Appareil de microscopie à fluorescence à super-résolution comprenant :
- un moyen d'activation stochastique d'émetteurs fluorescents contenus dans un échantillon (E) à observer ;
- une source de lumière (SL2), dite d'excitation, adaptée pour émettre un faisceau lumineux, dit d'excitation, (FL2) à une longueur d'onde adaptée pour induire une émission fluorescente des émetteurs fluorescents activés, ladite source de lumière d'excitation étant une source puisée;
- un système optique (MD1, L1, MD2, OBJ) configuré pour diriger le faisceau lumineux d'excitation vers l'échantillon (E) ;
- un système de détection optique (SIM, SCP) comprenant un capteur d'images matriciel (CIM) comprenant une pluralité de pixels (PIX) et configuré pour acquérir une séquence d'images (IM) de fluorescence dudit échantillon, et comprenant également un détecteur ou matrice de détecteurs à comptage de photons (MDCP) distinct dudit capteur d'images matriciel (CM) et configuré pour effectuer un comptage de photons de l'émission fluorescente pour déterminer des retards d'arrivée (Δt₁, Δt₂) desdits photons par rapport aux impulsions (IL2) dudit deuxième faisceau lumineux,
ladite source de lumière d'excitation étant adaptée de telle sorte que l'intervalle temporel entre deux impulsions successives est supérieur au temps de vie de fluorescence des émetteurs fluorescents;
**caractérisé en ce que**
ledit détecteur ou matrice de détecteurs à comptage de photons (MDCP) et ledit capteur d'images matriciel (CIM) sont également configurés pour associer chaque photon détecté par ledit détecteur ou matrice de détecteurs à comptage de photons (MDCP) à un ensemble de pixels (EPX) de ladite pluralité de pixels (PIX) dudit capteur d'images matriciel (CIM);
et **en ce que** ledit moyen d'activation stochastique est configuré de telle sorte que, pendant le temps d'acquisition d'une dite image, un émetteur fluorescent individuel au plus soit activé en moyenne dans une région de l'échantillon correspondant à un dit ensemble de pixels (EPX) du capteur d'images matriciel (CIM).

10. Appareil selon la revendication 9 dans lequel le détecteur ou matrice de détecteurs à comptage de photons (MDCP) est agencé de manière à recevoir une portion d'une émission fluorescente dudit échantillon, ledit ou chaque détecteur (DCP) de la matrice étant associé audit ensemble de pixels (EPX) dudit capteur d'images matriciel, et dans lequel le système de détection optique comprend :
- un système d'imagerie (SIM) configuré pour acquérir ladite séquence d'images de fluorescence dudit échantillon ;; et
- un circuit électronique (CMR) associé audit détecteur ou matrice de détecteurs à comptage de photons, configuré pour mesurer des retards d'arrivée de photons arrivant sur ledit ou chaque dit détecteur par rapport aux impulsions dudit faisceau lumineux d'excitation.

11. Appareil selon la revendication 10 comprenant également un processeur électronique (PR) configuré pour :
- recevoir en entrée la séquence d'images de fluorescence acquise par ledit capteur d'images matriciel et l'utiliser pour construire une image à super-résolution en localisant, dans les images de la séquence, des émetteurs fluorescents individuels ;
- recevoir en entrée des mesures de retard obtenues par ledit circuit électronique et les utiliser pour calculer des durées de vie de fluorescence ; et
- associer lesdites durées de vie de fluorescence aux émetteurs fluorescents individuels localisés.

12. Appareil selon la revendication 11 dans lequel ledit processeur électronique est configuré pour localiser lesdits émetteurs fluorescents individuels par estimation des centres de tâches de diffraction (TD) présents dans les images acquises par ledit capteur d'images matriciel.

13. Appareil selon l'une des revendications 11 ou 12 dans lequel ledit processeur électronique est configuré pour associer lesdits temps de vie de fluorescence aux émetteurs fluorescents individuels localisés en effectuant une corrélation spatio-temporelle entre les images acquises par ledit capteur d'images matriciel et les mesures de retard obtenues par ledit circuit électronique.

14. Appareil selon l'une des revendications 11 à 13 dans lequel ledit ou lesdits détecteurs à comptage de photons sont des diodes à avalanche à photons individuels.

15. Appareil selon l'une des revendications 11 à 14 comprenant une dite matrice de détecteurs à comptage de photons.

16. Appareil selon la revendication 15 dans lequel ladite matrice de détecteurs à comptage de photons est une matrice de diodes à avalanche à photons individuels non contigus, l'appareil comprenant également une matrice de microlentilles convergentes (MML) contiguës comprenant une dite microlentille agencée en regard de chaque diode à avalanche à photons individuels de la matrice, chaque dite microlentille étant optiquement conjuguée à un ensemble de pixels dudit capteur d'images matriciel.

17. Appareil selon l'une des revendications 11 à 14 comprenant une pluralité de dits détecteurs à comptage de photons (DCP), l'appareil comprenant également un faisceau de fibres optiques (FF) agencé de telle façon qu'une première face d'extrémité de chaque fibre optique soit optiquement conjuguée à un ensemble de pixels dudit capteur d'images matriciel, un dit détecteur à comptage de photons étant agencé en regard d'une deuxième face d'extrémité de chaque dite fibre optique.

18. Appareil selon l'une des revendications 11 à 17 dans lequel le moyen d'activation stochastique d'émetteurs fluorescents comprend une source de lumière (SL1), dite de conversion, adaptée pour émettre en direction de l'échantillon un faisceau lumineux (FL1) dit de conversion, présentant une longueur d'onde différente de celle du faisceau lumineux d'excitation et choisie de manière à activer lesdits émetteurs fluorescents, qui sont de type photoconvertible, en provoquant leur conversion d'un premier état vers un deuxième état différent du premier, l'intensité du faisceau lumineux de conversion étant choisie de telle sorte que, pendant le temps d'acquisition d'une dite image, un émetteur fluorescent individuel (EFI) au plus soit activé en moyenne dans une région de l'échantillon correspondant à un dit ensemble de pixels du capteur d'images matriciel.

19. Appareil selon l'une des revendications 11 à 17 dans lequel le moyen d'activation stochastique d'émetteurs fluorescents comprend un support diélectrique (SDT) transparent à la longueur d'onde du faisceau lumineux d'excitation, sur une face (SS) duquel peut être déposé l'échantillon, et une cuve fluidique (CF) contenant ledit support ; ledit système optique étant configuré pour diriger le faisceau lumineux d'excitation à travers le support de telle sorte qu'il subisse une réflexion totale interne sur ladite face.

20. Produit programme d'ordinateur comprenant des instructions exécutables par un ordinateur pour, lorsque ledit programme est exécuté sur un ordinateur :
- recevoir en entrée une séquence d'images (IM) d'émission fluorescente d'un échantillon (E) contenant des émetteurs fluorescents individuels (EFI), chaque image comprenant une pluralité de pixels ;
- recevoir en entrée des retards d'arrivée (Δt₁, Δt₂) de photons de ladite émission fluorescente par rapport à des impulsions d'un faisceau lumineux pulsé, chaque photon détecté et son retard d'arrivée étant associés à un ensemble de pixels de ladite pluralité de pixels d'une dite image ;
- utiliser ladite séquence d'images pour construire une image à super-résolution de l'échantillon en localisant lesdits émetteurs fluorescents individuels (EFI) ; et
- utiliser les retards d'arrivé des photons de ladite émission fluorescente pour calculer des temps de vie de fluorescence et les associer auxdits émetteurs fluorescents individuels (EFI).

## Patentansprüche

1. Super-Resolution-Fluoreszenzmikroskopieverfahren, umfassend die folgenden Schritte:
a) Bewirken einer stochastischen Aktivierung von Fluoreszenzemittern, die in einer zu betrachtenden Probe (E) enthalten sind, und Beleuchten der Probe mit einem Anregungslichtstrahl (FL2) mit einer Wellenlänge, die dafür geeignet ist, eine Fluoreszenzemission (FLF) von den aktivierten Emittern zu induzieren, wobei der Anregungslichtstrahl gepulst ist; und
b) Erfassen einer Bildfolge (IM) der Fluoreszenzemission mittels eines Bildgebungssystems (SIM), das einen Matrixbildsensor (CIM) umfasst, der eine Vielzahl von Pixeln (PIX) umfasst;
wobei das Verfahren außerdem einen Schritt des Zählens von Photonen der Fluoreszenzemission mittels eines vom Matrixbildsensor (CM) getrennten Detektors oder einer Detektormatrix zum Zählen von Photonen (MDCP) umfasst, um Verzögerungen der Ankunft der Photonen in Bezug auf die Impulse (IL2) des Anregungslichtstrahls zu bestimmen,
**dadurch gekennzeichnet, dass** das Zeitintervall zwischen zwei aufeinanderfolgenden Impulsen größer als die Fluoreszenzlebenszeit der Fluoreszenzemitter ist;
dass jedes von dem Detektor oder der Detektormatrix zum Zählen von Photonen (MDCP) erkannte Photon einer Gruppe von Pixeln (EPX) der Vielzahl von Pixeln (PIX) des Matrixbildsensors (CIM) zugeordnet wird; und
- dass die stochastische Aktivierung der Fluoreszenzemitter derart ausgeführt wird, dass während der Erfassungszeit eines der Bilder höchstens ein einzelner Fluoreszenzemitter (EFI) im Durchschnitt in einem Bereich der Probe entsprechend einer der Gruppen von Pixeln des Matrixbildsensors aktiviert wird.

2. Verfahren nach Anspruch 1, wobei der Schritt des Zählens von Photonen Folgendes umfasst:
c) Richten eines Teils der Fluoreszenzemission auf den Detektor oder die Detektormatrix zum Zählen von Photonen (MDCP), wobei der oder jeder Detektor der Matrix (DCP) einer Gruppe von Pixeln (EPX) des Matrixbildsensors zugeordnet wird; und
d) Verwenden des Detektors oder der Detektoren zum Zählen von Photonen zum Messen der Verzögerungen der Ankunft (Δt₁, Δt₂) von Fluoreszenzphotonen in Bezug auf die Impulse des Anregungslichtstrahls.

3. Verfahren nach Anspruch 2, ferner umfassend die folgenden Schritte:
e) Verwenden der Bildfolge, die in Schritt b) erfasst wurde, um durch Lokalisieren der einzelnen Fluoreszenzemitter ein Super-Resolution-Bild zu erstellen;
f) Verwenden der Verzögerungen der Ankunft der Fluoreszenzphotonen, die in Schritt d) gemessen wurden, um Fluoreszenzlebenszeiten zu berechnen und diese den einzelnen Fluoreszenzemittern zuzuordnen, die in Schritt e) lokalisiert wurden;
wobei die Schritte e) und f) mittels eines elektronischen Prozessors (PR) ausgeführt werden.

4. Verfahren nach Anspruch 3, wobei Schritt e) eine Lokalisierung der einzelnen Fluoreszenzemitter durch Schätzen der Zentren von Beugungsflecken (TD), die in den in Schritt b) erfassten Bildern vorliegen, umfasst.

5. Verfahren nach einem der Ansprüche 3 oder 4, ferner umfassend einen Schritt g) zur räumlichen-zeitlichen Korrelation zwischen den in Schritt b) erfassten Bildern und den Verzögerungen der Ankunft der Fluoreszenzphotonen, die in Schritt d) gemessen wurden, um die Fluoreszenzlebensdauern den einzelnen Fluoreszenzemittern zuzuordnen.

6. Verfahren nach einem der Ansprüche 2 bis 5, wobei die Detektormatrix zum Zählen von Photonen eine Vielzahl der Detektoren (DCP) umfasst, die gemäß einer Vielzahl von Reihen und Spalten angeordnet sind.

7. Verfahren nach einem der vorhergehenden Ansprüche, wobei die Fluoreszenzemitter, die in der Probe enthalten sind, umwandelbar sind und Schritt a) das Beleuchten der Probe mittels des Anregungslichtstrahls (FL2) und eines Umwandellichtstrahls (FL1) umfasst. wobei der Umwandellichtstrahl eine Wellenlänge aufweist, die sich von derjenigen des Anregungslichtstrahls unterscheidet und derart ausgewählt wird, dass die Fluoreszenzemitter aktiviert werden, indem ihre Umwandlung von einem ersten Zustand in einen zweiten Zustand, der von dem ersten verschieden ist, bewirkt wird, wobei die Intensität des Umwandellichtstrahls derart ausgewählt wird, dass während der Erfassungszeit eines der Bilder höchstens ein einzelner Fluoreszenzemitter (EFI) im Durchschnitt in einem Bereich der Probe entsprechend einer der Gruppen von Pixeln des Matrixbildsensors aktiviert wird.

8. Verfahren nach einem der Ansprüche 1 bis 6, wobei die Probe:
- eine submikrometrische Dicke aufweist,
- auf eine Fläche (SS) eines dielektrischen Trägers (SDT) aufgebracht wird, der für die Wellenlänge des Anregungslichtstrahls durchlässig ist,
- eine dem Träger entgegengesetzte Oberfläche aufweist, die mit Molekülen eines ersten Typs (BR1) funktionalisiert und mit einer Lösung in Kontakt gebracht wird, die Moleküle eines zweiten Typs (BR2) enthält, die an Fluoreszenzemitter (EF) gebunden sind und dazu neigen, sich vorübergehend an Moleküle des ersten Typs durch eine Reaktion zu binden, die eine derartige Kinetik aufweist, dass im Durchschnitt höchstens ein Molekül des zweiten Typs in einem Bereich der Probe entsprechend einer der Gruppen von Pixeln des Matrixbildsensors an ein Molekül des ersten Typs gebunden wird;
wobei Schritt a) das Beleuchten der Probe durch innere Totalreflexion mittels des Anregungslichtstrahls derart umfasst, dass die Fluoreszenzemission der einzigen Fluoreszenzemitter, die sich in einem submikrometrischen Abstand von der Fläche des dielektrischen Trägers befinden, aktiviert werden.

9. Super-Resolution-Fluoreszenzmikroskopievorrichtung, Folgendes umfassend:
- ein stochastisches Aktivierungsmittel für Fluoreszenzemitter, die in einer zu betrachtenden Probe (E) enthalten sind;
- eine Lichtquelle (SL2), die als Anregungslichtquelle bezeichnet wird, die dafür geeignet ist, einen Lichtstrahl, der als Anregungslichtstrahl (FL2) bezeichnet wird, zu emittieren, mit einer Wellenlänge, die dafür geeignet ist, eine Fluoreszenzemission der aktivierten Fluoreszenzemitter zu induzieren, wobei die Anregungslichtquelle eine gepulste Quelle ist;
- ein optisches System (MD1, L1, MD2, OBJ), das dafür konfiguriert ist, den Anregungslichtstrahl auf die Probe (E) zu richten;
- ein optisches Erkennungssystem (SIM, SCP), umfassend einen Matrixbildsensor (CIM), umfassend eine Vielzahl von Pixeln (PIX), und welches dafür konfiguriert ist, eine Fluoreszenzbildsequenz (IM) der Probe zu erfassen, und ferner umfassend einen von dem Matrixbildsensor (CM) getrennten Detektor oder eine Detektormatrix zum Zählen von Photonen (MDCP) und der/die dafür konfiguriert ist, ein Zählen von Photonen der Fluoreszenzemission zu veranlassen, um Verzögerungen der Ankunft (Δt₁, Δt₂) der Photonen in Bezug auf die Impulse (IL2) des zweiten Lichtstrahls zu bestimmen,
wobei die Anregungslichtquelle derart angepasst ist, dass das Zeitintervall zwischen zwei aufeinanderfolgenden Impulsen größer als die Fluoreszenzlebenszeit der Fluoreszenzemitter ist;
**dadurch gekennzeichnet,**
**dass** der Detektor oder die Detektormatrix zum Zählen von Photonen (MDCP) und der Matrixbildsensor (CIM) ferner dafür konfiguriert sind, jedes von dem Detektor oder der Detektormatrix zum Zählen von Photonen (MDCP) erkannte Photon einer Gruppe von Pixeln (EPX) der Vielzahl von Pixeln (PIX) des Matrixbildsensors (CIM) zuzuordnen;
und **dass** das Mittel zur stochastischen Aktivierung derart konfiguriert ist, dass während der Erfassungszeit eines der Bilder höchstens ein einzelner Fluoreszenzemitter im Durchschnitt in einem Bereich der Probe entsprechend einer der Gruppen von Pixeln (EPX) des Matrixbildsensors (CIM) aktiviert wird.

10. Vorrichtung nach Anspruch 9, wobei der Detektor oder die Detektormatrix zum Zählen von Photonen (MDCP) zum Empfangen eines Teils einer Fluoreszenzemission der Probe eingerichtet ist, wobei der oder jeder Detektor (DCP) der Matrix der Gruppe von Pixeln (EPX) des Matrixbildsensors zugeordnet ist und wobei das optische Erkennungssystem Folgendes umfasst:
- ein Bildgebungssystem (SIM), das dafür konfiguriert ist, die Fluoreszenzbildfolge der Probe zu erfassen; und
- eine elektronische Schaltung (CMR), die dem Detektor oder der Detektormatrix zum Zählen von Photonen zugeordnet ist, die dafür konfiguriert ist, Verzögerungen der Ankunft von Photonen, die an dem oder jedem der Detektoren ankommen, in Bezug auf die Impulse des Anregungslichtstrahls zu messen.

11. Vorrichtung nach Anspruch 10, ferner umfassend einen elektronischen Prozessor (PR), der dafür konfiguriert ist:
- am Eingang die Fluoreszenzbildfolge, die von dem Matrixbildsensor erfasst wurde, zu empfangen und zum Erstellen eines Super-Resolution-Bildes durch Lokalisieren von einzelnen Fluoreszenzemittern in den Bildern der Folge zu verwenden;
- am Eingang Verzögerungsmessungen, die durch die elektronische Schaltung erhalten wurden, zu empfangen und diese zu verwenden, um die Fluoreszenzlebensdauern zu berechnen; und
- die Fluoreszenzlebensdauern den einzelnen lokalisierten Fluoreszenzemittern zuzuordnen.

12. Vorrichtung nach Anspruch 11, wobei der elektronische Prozessor dafür konfiguriert ist, die einzelnen Fluoreszenzemitter durch Schätzen der Zentren von Beugungsflecken (TD), die in den von dem Matrixbildsensor erfassten Bildern vorliegen, zu lokalisieren.

13. Vorrichtung nach einem der Ansprüche 11 oder 12, wobei der elektronische Prozessor dafür konfiguriert ist, die Fluoreszenzlebenszeiten den einzelnen lokalisierten Fluoreszenzemittern zuzuordnen durch Ausführen einer räumlichen-zeitlichen Korrelation zwischen den von dem Matrixbildsensor erfassten Bildern und den von der elektronischen Schaltung erhaltenen Verzögerungsmessungen.

14. Vorrichtung nach einem der Ansprüche 11 bis 13, wobei der oder die Detektoren zum Zählen von Photonen Einzelphotonen-Avalanche-Dioden sind.

15. Vorrichtung nach einem der Ansprüche 11 bis 14, umfassend die eine Detektormatrix zum Zählen von Photonen.

16. Verfahren nach Anspruch 15, wobei die Detektormatrix zum Zählen von Photonen eine Matrix von nicht aneinanderhängenden Einzelphotonen-Avalanche-Dioden ist, wobei die Vorrichtung ferner eine Matrix von aneinanderhängenden konvergenten Mikrolinsen (MML) umfasst, die eine der Mikrolinsen umfasst, die gegenüber jeder Einzelphotonen-Avalanche-Diode der Matrix angeordnet ist, wobei jede der Mikrolinsen optisch einer Gruppe von Pixeln des Matrixbildsensors zugehörig ist.

17. Vorrichtung nach einem der Ansprüche 11 bis 14, umfassend eine Vielzahl der Detektoren zum Zählen von Photonen (DCP), wobei die Vorrichtung ferner einen Lichtleitfaserstrahl (FF) umfasst, der derart angeordnet ist, dass eine erste Endfläche jeder Lichtleitfaser optisch einer Gruppe von Pixeln des Matrixbildsensors zugehörig ist, wobei einer der Detektoren zum Zählen von Photonen gegenüber einer zweiten Endfläche jeder der Lichtleitfasern angeordnet ist.

18. Vorrichtung nach einem der Ansprüche 11 bis 17, wobei das Mittel zum stochastischen Aktivieren von Fluoreszenzemittern eine Lichtquelle (SL1), die als Umwandlungslichtquelle bezeichnet wird, umfasst, die dafür geeignet ist, in Richtung der Probe einen Lichtstrahl (FL1), der als Umwandlungslichtstrahl bezeichnet wird, zu emittieren, der eine andere Wellenlänge aufweist als diejenige des Anregungslichtstrahls und so ausgewählt ist, dass die Fluoreszenzemitter aktiviert werden, die vom photokonvertiblen Typ sind, indem ihre Umwandlung von einem ersten Zustand zu einem zweiten Zustand, der von dem ersten verschieden ist, bewirkt wird, wobei die Intensität des Umwandellichtstrahls derart ausgewählt ist, dass während der Erfassungszeit eines der Bilder höchstens ein einzelner Fluoreszenzemitter (EFI) im Durchschnitt in einem Bereich der Probe entsprechend einer der Gruppen von Pixeln des Matrixbildsensors aktiviert wird.

19. Vorrichtung nach einem der Ansprüche 11 bis 17, wobei das Mittel zur stochastischen Aktivierung von Fluoreszenzemittern einen dielektrischen Träger (SDT), der für die Wellenlänge des Anregungslichtstrahls durchlässig ist, wobei auf einer Fläche (SS) von diesem die Probe aufgebracht sein kann, und eine Fluidwanne (CF), die den Träger enthält, umfasst; wobei das optische System dafür konfiguriert ist, den Anregungslichtstrahl derart über den Träger zu richten, dass er einer inneren Totalreflexion auf der Fläche unterzogen wird.

20. Computerprogrammprodukt, umfassend Anweisungen, die von einem Computer ausführbar sind, um, wenn das Programm auf einem Computer ausgeführt wird:
- am Eingang eine Bildfolge (IM) einer Fluoreszenzemission einer Probe (E), die einzelne Fluoreszenzemitter (EFI) enthält, zu empfangen, wobei jedes Bild eine Vielzahl von Pixeln umfasst;
- am Eingang Verzögerungen der Ankunft (Δt₁, Δt₂) von Photonen der Fluoreszenzemission in Bezug auf die Impulse eines gepulsten Lichtstrahls zu empfangen, wobei jedes erkannte Photon und seine Ankunftsverzögerung einer Gruppe von Pixeln der Vielzahl von Pixeln eines der Bilder zugeordnet ist;
- die Bildsequenz zum Erstellen eines Super-Resolution-Bildes der Probe durch Lokalisieren der einzelnen Fluoreszenzemitter (EFI) zu verwenden; und
- die Verzögerungen der Ankunft der Photonen der Fluoreszenzemission zu verwenden, um Fluoreszenzlebenszeiten zu berechnen und diese den einzelnen Fluoreszenzemittern (EFI) zuzuordnen.

## Claims

1. A super-resolution fluorescence microscopy method comprising the following steps:
a) provoking a stochastic activation of fluorescent emitters contained in a sample (E) to be observed, and illuminating said sample with an excitation light beam (FL2) having a wavelength suitable for inducing a fluorescent emission (FLF) from the activated emitters, said excitation light beam being pulsed; and
b) acquiring a sequence of images (IM) of said fluorescent emission by means of an imaging system (SIM) comprising a matrix image sensor (CIM) comprising a plurality of pixels (PIX);
the method comprises also a step of counting of photons of the fluorescent emission by means of a photon-counting detector or matrix of detectors (MDCP) distinct from said matrix image sensor (CM) to determine arrival delays of said photons relative to the pulses (IL2) of said excitation light beam,
**characterized in that** the time interval between two successive impulses is greater than the fluorescence lifetime of the fluorescent emitters,
**in that** each photon detected by the detector or array of photon counting detectors (MDCP) is associated with a set of pixels (EPX) of said plurality of pixels (PIX) of said matrix image sensor (CIM); and
- **in that** the stochastic activation of the fluorescent emitters is carried out in such a way that, during the acquisition time of a said image, at most one individual fluorescent emitter (EFI) is activated on average in a region of the sample corresponding to a said set of pixels of the matrix image sensor.

2. The method according to claim 1, wherein said photon counting step comprises:
c) directing a portion of said fluorescent emission to a photon-counting detector or matrix of detectors (MDCP), said or each detector of the matrix (DCP) being associated with a set of pixels (EPX) of said matrix image sensor; and
d) using the photon-counting detector or detectors to measure arrival delays (Δt₁, Δt₂) of fluorescence photons relative to the pulses of said excitation light beam.

3. The method according to claim 2, also comprising the following steps:
e) using the sequence of images acquired in the step b) to construct a super-resolution image by locating said individual fluorescent emitters;
f) using the arrival delays of the fluorescence photons measured in step d) to calculate fluorescence lifetimes, and associate them with the individual fluorescent emitters located in the step e);
the steps e) and f) being implemented by means of an electronic processor (PR).

4. The method according to claim 3, wherein said step e) comprises a location of said individual fluorescent emitters by estimating the centers of diffraction spots (TD) present in the images acquired in the step b).

5. The method according to one of claims 3 or 4, further comprising a step g) of space-time correlation between the images acquired in the step b) and the arrival delays of the fluorescence photons measured in the step d) to associate said fluorescence lifetimes with said individual fluorescent emitters.

6. The method according to one of claims 2 to 5, wherein said matrix of photon-counting detectors comprises a plurality of said detectors (DCP) arranged according to a plurality of rows and of columns.

7. The method according to one of the preceding claims, wherein the fluorescent emitters contained in the sample are convertible and the step a) comprises the illumination of the sample by means of said excitation light beam (FL2) and a conversion light beam (FL1), the conversion light beam having a wavelength that is different from that of the excitation light beam and is chosen so as to activate said fluorescent emitters by provoking their conversion from a first state to a second state that is different from the first, the intensity of the conversion light beam being chosen such that, during the time of acquisition of one said image, at most one individual fluorescent emitter (EFI) is activated on average in a region of the sample corresponding to one said set of pixels of the matrix image sensor.

8. The method according to one of claims 1 to 6, wherein the sample:
- has a sub-micrometric thickness,
- is deposited on a face (SS) of a dielectric support (SDT) that is transparent to the wavelength of the excitation light beam,
- has a surface opposite the support which is functionalized with molecules of a first type (BR1) and is placed in contact with a solution containing molecules of a second type (BR2) bonded to fluorescent emitters (EF) and susceptible to bonding transiently with the molecules of the first type by a reaction having a kinetic such that, on average, at most one molecule of the second type is bonded to a molecule of the first type in a region of the sample corresponding to one said set of pixels of the matrix image sensor;
the step a) comprising the illumination of the sample by total internal reflection by means of said excitation light beam such that the fluorescent emission from the sole fluorescent emitters situated at a sub-micrometric distance from the face of the dielectric support is activated.

9. A super-resolution fluorescence microscopy device comprising:
- a means for stochastic activation of fluorescent emitters contained in a sample (E) to be observed;
- a light source (SL2), called excitation light source, suitable for emitting a light beam, called excitation light beam (FL2), at a wavelength suitable for inducing a fluorescent emission from the activated fluorescent emitters, said excitation light source being a pulsed light;
- an optical system (MD1, L1, MD2, OBJ) configured to direct the excitation light beam toward the sample (E);
- an optical detection system (SIM, SCP) comprising a matrix image sensor (CIM) comprising a plurality of pixels (PIX) and configured to acquire a sequence of fluorescence images (IM) of said sample, and further comprising a photon counting detector or matrix of detectors (MDCP) distinct from said matrix image sensor (CM) and configured to perform a counting of fluorescent remission photons to determine arrival delays (Δt₁, Δt₂) of said photons by relation to the pulses (IL2) of said second light beam,
said excitation light source being adapted such that the time interval between two successive pulses is greater than the fluorescence lifetime of the fluorescent emitters;
**characterised in that**
said photon counting detector or matrix of detectors (MDCP) and said matrix image sensor (CIM) are further configured to associate each photon detected by said photon counting detector or array of detectors (MDCP) with a set of pixels (EPX) of said plurality of pixels (PIX) of said matrix image sensor (CIM);
and **in that** said stochastic activation means is configured such that, during the acquisition time of a said image, at most one individual fluorescent emitter is active on average in a sample region corresponding to a said set of pixels (EPX) of the matrix image sensor (CIM).

10. The device according to claim 9 wherein the detector or matrix of photon counting detectors (MDCP) is arranged to receive a portion of a fluorescent emission from said sample, said or each detector (DCP) of the matrix being associated with said set of pixels (EPX) of said image sensor matrix, and wherein the optical detection system comprises:
- an imaging system (SIM) configured to acquire said sequence of fluorescence images of said sample; and
- an electronic circuit (CMR) associated with said photon-counting detector or matrix of detectors, configured to measure arrival delays of photons arriving on said or each said detector relative to the pulses of said excitation light beam.

11. The device according to claim 10, further comprising an electronic processor (PR) configured to:
- receive as input the sequence of fluorescence images acquired by said matrix image sensor and use it to construct a super-resolution image by locating, in the images of the sequence, individual fluorescent emitters;
- receive as input delay measurements obtained by said electronic circuit and use them to calculate fluorescence lifetimes; and
- associate said fluorescence lifetimes with the located individual fluorescent emitters.

12. The device according to claim 11, wherein said electronic processor is configured to locate said individual fluorescent emitters by estimating the centers of diffraction spots (TD) present in the images acquired by said matrix image sensor.

13. The device according to one of claims 11 and 12, wherein said electronic processor is configured to associate said fluorescence lifetimes with the located individual fluorescent emitters by performing a space-time correlation between the images acquired by said matrix image sensor and the delay measurements obtained by said electronic circuit.

14. The device according to one of claims 11 to 13, wherein said photon-counting detector or detectors are individual photon avalanche diodes.

15. The device according to one of claims 11 to 14, comprising one said matrix of photon-counting detectors.

16. The device according to claim 15, wherein said matrix of photon-counting detectors is a matrix of non-contiguous individual photon avalanche diodes, the device further comprising a matrix of contiguous convergent microlenses (MML) comprising one said microlens arranged facing each individual photon avalanche diode of the matrix, each said microlens being optically conjugated with a set of pixels of said matrix image sensor.

17. The device according to one of claims 11 to 14, comprising a plurality of said photon-counting detectors (DCP), the device further comprising a bundle of optical fibers (FF) arranged in such a way that a first end face of each optical fiber is optically conjugated with a set of pixels of said matrix image sensor, one said photon-counting detector being arranged facing a second end face of each said optical fiber.

18. The device according to one of claims 11 to 17, wherein the means for stochastic activation of fluorescent emitters comprises a light source (SL1), called conversion light source, suitable for emitting, toward the sample, a light beam (FL1), called conversion light beam, having a wavelength different from that of the excitation light beam and chosen so as to activate said fluorescent emitters, which are of photoconvertible type, by provoking their conversion from a first state to a second state that is different from the first, the intensity of the conversion light beam being chosen such that, during the time of acquisition of one said image, at most one individual fluorescent emitter (EFI) is activated on average in a region of the sample corresponding to one said set of pixels of the matrix image sensor.

19. The device according to one of claims 11 to 17, wherein the means for stochastic activation of fluorescent emitters comprises a dielectric support (SDT) that is transparent to the wavelength of the excitation light beam, on a face (SS) of which the sample can be deposited, and a fluid tank (CF) containing said support; said optical system being configured to direct the excitation light beam through the support such that it undergoes a total internal reflection on said face.

20. A computer program product comprising computer-executable instructions for, when said program is run on a computer:
- receiving as input a sequence of images (IM) of fluorescent emission from a sample (E) containing individual fluorescent emitters (EFI), each image comprising a plurality of pixels;
- receiving as input arrival delays (Δt₁, Δt₂) of photons of said fluorescent emission relative to pulses of a pulsed light beam, each detected photon and its arrival delay being associated with a set of pixels of said plurality of pixels of a said image;
- using said sequence of images to construct a super-resolution image of the sample by locating said individual fluorescent emitters (EFI); and
- using the arrival delays of the photons of said fluorescent emission to calculate fluorescence lifetimes and associate them with said individual fluorescent emitters (EFI).
